# EUROPEAN PATENT SPECIFICATION

(11) **EP 4 335 137 B1**
(45) Date of publication and mention of the grant of the patent: **12.02.2025**
(21) Application number: 21819760.6
(22) Date of filing: 23.11.2021
(51) Int. Cl.: H04W 12/122, H04W 12/72

(54) **DETECTION OF FALSE BASE STATIONS**
ERKENNUNG VON FALSCHEN BASISSTATIONEN
DÉTECTION DE FAUSSES STATIONS DE BASE

(30) Priority: 04.05.2021 TR 202107621
(43) Date of publication of application: 13.03.2024
(73) Proprietor: Telefonaktiebolaget LM Ericsson (publ), 164 83 Stockholm (SE)
(72) Inventor: KARAKOC, Ferhat, 34912 Istanbul (TR); INCE, Ayse Bilge, 34724 Istanbul Kadikoy (TR); USTUNDAG SOYKAN, Elif, 164 83 Stockholm (SE); TOMUR, Emrah, 35140 Izmir (TR); KARAÇAY, Leyli, 34766 Istanbul (TR)
(74) Representative: Ericsson
(86) International application number: PCT/EP2021/082641
(87) International publication number: WO 2022/233443

(56) References cited:
- EP-A1- 3 298 814
- EP-B1- 3 298 814
- WO-A1-2021/058120
- VAN DEN BROEK FABIAN F VANDENBROEK@CS RU NL ET AL: "Defeating IMSI Catchers", USER INTERFACE SOFTWARE AND TECHNOLOGY, ACM, 2 PENN PLAZA, SUITE 701 NEW YORK NY 10121-0701 USA, 12 October 2015 (2015-10-12), pages 340 - 351, XP058523935, ISBN: 978-1-4503-4531-6, DOI: 10.1145/2810103.2813615
- SHINJO PARK ET AL: "Anatomy of Commercial IMSI Catchers and Detectors", PRIVACY IN THE ELECTRONIC SOCIETY, ACM, 2 PENN PLAZA, SUITE 701NEW YORKNY10121-0701USA, 11 November 2019 (2019-11-11), pages 74 - 86, XP058444054, ISBN: 978-1-4503-6830-8, DOI: 10.1145/3338498.3358649

## Description

### Technical Field

The present application relates to a method carried out at a verification entity of a cellular network and the corresponding verification entity. In addition a computer program comprising program code and a carrier comprising the computer program is provided.

### Background

Subscribers in the cellular systems have a long-term identifier called the International Mobile Subscriber Identifier (IMSI), which should be handled with care in network protocols and applications for security and privacy reasons. When a subscriber attempts to join in the network by connecting to a base station via her UE, a procedure called "Attach" has to be followed which requires disclosure of UE 's (User Equipment, also called mobile entity hereinafter) identity on the radio link.

When an attach request is sent by the UE, the MME (Mobility Management Entity) initiates a different procedure depending on the type of such attach. The criteria such as with which UE ID (e.g., IMSI) the UE is making a request, to which MME the UE is trying to attach, and whether the valid last UE context exist in the network will be used to distinguish different types of initial attach. In all types of initial attach, the UE ID acquisition procedures are required. There are three attach cases. First case occurs when neither UE nor network has the last UE context; a UE sends an attach request message to an MME using its IMSI as UE ID. The MME initiates authentication and NAS (Non-Access Stratum) security setup procedure since it does not know the UE. Second case is when a UE is attaching to the MME that it has attached to last time, but the MME doesn't have the valid last UE Context of the UE. In this case the MME sends an Identity Request message, requesting an IMSI. The third case is when a UE is attaching to a new MME to which it has never attached before, and the MME doesn't have the valid Last UE Context of the UE.

During the "Attach" procedure in 4G and earlier generations, UEs are requested to identify themselves by the base station they are attempting to connect. UEs usually respond to these requests by declaring their TMSI (temporary identifier). Yet, related standards allow MME to request UEs' long term identifiers, IMSI, instead of TMSI, by sending a special IDENTITY REQUEST message, as a mechanism to resolve the cases where TMSIs are lost in the network. The MME can send an IDENTITY REQUEST message to a UE at any time while the UE is in EMM-CONNECTED mode and the UE shall be ready to respond to an IDENTITY REQUEST message at any time whilst in EMM-CONNECTED mode. The user's response contains the IMSI in cleartext. This may cause a breach in the provision of user identity confidentiality. This mechanism is exploited by false base stations (FBS, also known as IMSI catchers) to capture IMSI of UEs by transmitting IDENTITY REQUEST messages to the victim UEs. To do this, false base stations usually advertise themselves as a good service point by radiating more powerful signals. Because there is no security mechanism by design for mutual authentication between a UE and a base station during the initial phase of the Attach procedure, they can easily manage to fool UEs around the fake base stations in this way. Preventing this kind of misuse of base stations is mostly not possible by just legal regulations. It is also necessary to take some technical countermeasures.

The earlier approaches proposed for detection of false base stations can be device-assisted, network-assisted or apparatus-based. Known device-assisted methods are usually primitive in that a technician just manually observes the wireless signals at a specific location by using a radio device or spectrum analyzer to see if there is any suspicious signal that could be a sign for a possible false base station. In another solution within this category, a special terminal sends a Location Area Update Request message to a targeted base station, and then if a REJECT message is received from this base station in return, it is identified as false base station. In network-assisted solutions, regular measurement reports of all UEs in a region of interest are first collected by the base stations and forwarded to a central unit for further processing. Then, a type of anomaly detection is performed in comparison with the legitimate network topology by analyzing the collected measurement reports. There is also an apparatus-based solution, which proposes a method and an apparatus to detect IMSI catchers by using the apparatus as a bait to reveal IMSI catcher. That approach relies on the observation that a typical IMSI catcher unicasts IDENTITY REQUEST messages more frequently than expected.

Some solutions require additional information about underlying legitimate network such as network topology. Some of these also require information from measurement reports of UEs, which requires collection of additional data with large size about network topology under investigation.

Some of the existing solutions are based on comparison of the radio signals collected from false base station with signals from or data related to legitimate base stations. In these methods, characteristics of underlying legitimate network are used as the basis for comparison. However, to be able to do this, a heavy data collection process is required from both legitimate network and from possible rogue base stations. This could be done by using a dedicated radio device belonging to the network operator, usually on a car to scan various locations. These are expensive operations in terms of time and workforce.

There are some solutions that do not require complex signal analysis but only collect selected protocol messages like IDENTITY REQUEST. However, these methods require use of dedicated devices in the form of apparatus to collect data from the mobile network. Although this approach may be effective, it is costly since it requires usage of additional hardware. WO 2021/058120 A1 discloses a method for identifying and reporting fraudulent base stations based on the fact whether several reports are received from the same base station.

In sum, there are several problems of existing solutions in data collection and comparison phases as given below.
- Collecting data with a particular device such as spectrum analyzer usually involves manual scanning by dedicated technical personnel. Therefore, such methods are inefficient in terms of time and effort.
- Some methods require transmission of particular type of messages, i.e.., Location Area Update Request by dedicated terminal devices. This situation causes energy consumption and creates additional network traffic.
- Legitimate network information is needed to compare with collected data. This requires that either up-to-date network topology information exists or data to be collected before any false station starts emitting signals. This may prevent to opportunity of acquiring IMSI catcher detection as a paid service offered by third parties.
- False positive and false negative rates may be at unsatisfactory levels.

### Summary

Accordingly a need exists to overcome the above-mentioned problems and to be able to easily detect the false base stations in an effective way.

This need is met by the features of the independent claims. Further aspects are described in the dependent claims.

According to a first aspect a carried out at a verification entity of the cellular network is provided as mentioned in claim 1, wherein inter alia the verification entity receives a verification request transmitted by a mobile entity by which a verification of an identity request is requested, wherein the identity request requests a permanent, non-temporary identity of the mobile entity from the mobile entity by which the mobile entity is uniquely identified in the cellular network. In response to the verification request, the verification entity checks whether the identity request corresponds to one of a plurality of identity requests stored in a memory. If this is not the case, it is determined that the identity request was transmitted by an entity not belonging to the cellular network and not entitled to request the permanent, non-temporary identity of the mobile entity.

Furthermore, the corresponding verification entity is provided comprising a memory and at least one processing unit, wherein the memory contains instructions executable by the at least one processing unit, wherein the verification entity is operative as discussed above or as discussed in further detail below.

The verification entity receiving the verification request can check, based on a memory comprising the identity requests transmitted by the cellular network in a defined time period, whether the identity request was transmitted by an entity of the network or not. The memory can comprise a log of the transmitted identity requests, and based on the queries the verification entity can check whether the request was transmitted by an entity entitled to do so.

A computer program comprising program code is provided, wherein execution of the program code causes at least one processing unit of the verification request to execute a method as discussed above or as explained below in further detail.

Finally, a carrier comprising the computer program is provided, wherein the carrier is one of an electronic signal, optical signal, radio signal, or computer readable storage medium.

It is to be understood that the features mentioned above and features yet to be explained below, can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

### Brief description of the drawings

The foregoing and additional features and effects of the invention will become apparent from the following detailed description when read in conjunction with the accompanying drawings in which like reference numerals refer to like elements.
FIG. 1 shows a schematic view of a message exchange between the involved entities for identifying a false base station in a cellular network.
FIG. 2 shows an example flowchart of a method carried out at a mobile entity in the message exchange of FIG. 1.
FIG. 3 shows an example flowchart of a method carried out at a verification entity in the message exchange of FIG. 1.
FIG. 4 shows an example schematic representation of a mobile entity configured to help identifying a false base station.
FIG. 5 shows another example schematic representation of a mobile entity configured to help identifying a false base station.
FIG. 6 shows an example schematic representation of a verification entity configured to identify a false base station.
FIG. 7 shows another example schematic representation of a verification entity configured to identify a false base station.

### Detailed Description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations and elements illustrated in the drawings are not necessarily shown to scale. Rather, the various elements are represented such that their function and general purpose becomes apparent to a person with skill in the art. Any connection or coupling between functional blocks, devices, components of physical or functional units shown in the drawings and described hereinafter, may also be implemented by an indirect connection or coupling. A coupling between components may be established over a wired or wireless connection. Functional blocks may be implemented in hardware, software, firmware, or a combination thereof.

Within the context of the present application, the term mobile entity or user equipment, UE or user entity, refers to a device for instance used by a person, such as a user for his or her personal communication. It can be a telephone type of device, for example a telephone or a session initiation protocol, SIP, or voice over IP phone, cellular telephone, mobile station, cordless phone, or a personal digital assistant type of device like laptop, notebook, notepad, tablet equipped with a wireless data connection. A UE may be equipped with a subscriber identity module, SIM, or electronic SIM comprising unique identities such as the IMSI, the TMSI or the GUTI, Globally Unique Temporary UE Identity, which are associated with the user using the UE. The presence of a SIM within the UE customizes the UE uniquely, is a subscription of the user.

For the sake of clarity, it is noted that there is a difference, but also tight connection between a user and a subscriber. User gets access to the network by acquiring a subscription to the network and by that becomes a subscriber within the network. The network then recognizes the subscriber, using the IMSI, TMSI or GUTI or the like and uses the associated subscription to identify related subscription data. A user is the actual user of the UE, and the user may also be the one owning the subscription, but the user and the owner of the subscription may also be different. By way of example the subscription may be owned by one of the parents wherein the actual user is the child.

In the following a method is discussed in which the IMSI catchers or false base stations are detected, whose aim is to capture long-term identifiers such as the IMSI of the UE's to track the locations of mobile network subscribers.

The proposed method uses an approach used by the false base station, which sends identity request messages to force the subscribers to send their identities. In the solution below, a verification entity, such as an MME, logs the identity request messages of the network. In the solution discussed below, the mobile entity can comprise an application which can be a mobile device application or which can be USIM application, which captures the identity request messages received by the mobile entity and which sends the messages to the cellular network, the cellular network then checks whether the serving MME which has sent the identity request message, belongs to the cellular network. If the check result is negative, this means that someone else has sent the identity request message in the area where the identity request message has been detected by the UE.

The method introduces an application which can be a SIM application or can be a mobile application and works as follows. The application in the UE captures the IDENTITY REQUEST messages and sends them to the core network. Then the network checks whether these IDENTITY REQUEST messages have been sent by the MME or any other entity in the network. If the check result is that these messages haven't been sent by the MME, it is decided that there is an attacker in the area to which the serving MME belongs, who sends fake IDENTITY REQUEST messages. To be able to verify the messages, the network should store the IDENTITY REQUEST messages that have been sent for a short while. It is not necessary to store these messages for all the users and it is enough to store them for only the UEs where the application runs and/or for the UEs that are in subjected area.

When the application in the UE is a SIM application, then the UE can send the captured IDENTITY REQUEST messages to the network. If the application is a mobile application, then there can be different deployment options on the mobile operator. An example deployment scenario can be the following: An application server can be deployed in the operator DMZ zone, the client application communicates with the application server and the application server sends these messages to the core network via SCEF (Service Capabilities Exposure Function) framework.

The UEs used for detection of IMSI catchers can be special purpose UEs or they can be ordinary UEs that belong to subscribers of the operator. The false positive probability of this method is near to zero since no statistical analysis is executed for the decision.

There can be another use cases where all UEs include the SIM application and the operator can activate the application for a specific area where they would like to detect the IMSI catcher.

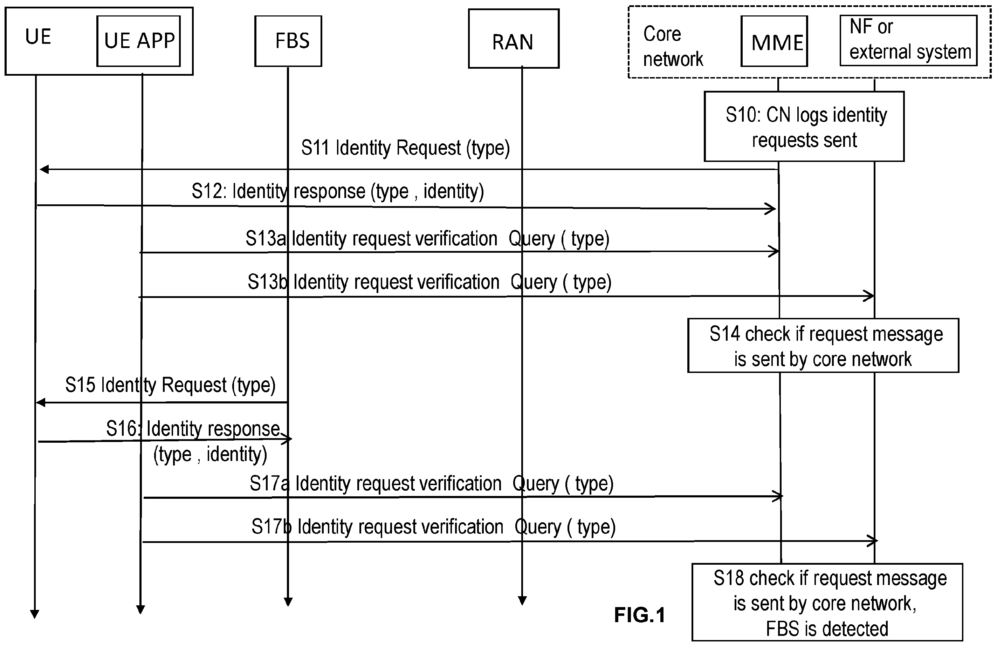

In the embodiment shown in Figure 1 the core network comprises a verification entity, which is implemented here as the MME 200 or a network function or any other external system of function 250. Furthermore, in the embodiment shown a UE 100 is shown which comprises a separate application which implements the verification of the received identity request. Additionally the RAN (Radio Access Network) 60 is shown.

As shown in step S10, the core network logs the identity request messages that were sent to mobile entities. The network function 250 can be a new network function or an existing network function such as a network data analytics function, NWDAF. The log mechanism can be implemented in different ways on the MME or on the external system or network function by using different memories such as a database or log files. The selection of the core network component such as the MME or the network function may depend on the choice of the operator of the cellular network. In step S11 the core network, here the MME 200, sends an identity request message to the UE 100, which provides the requested identity type to the MME due to the loss of the UE identity mapping or due to any other reason. In step S12 the UE sends the identity response message to the MME by providing the requested identity such as the IMSI.

Furthermore, the application in the UE, the UE app or the UE itself is transmitting a verification request requesting the verification of the identity request to the MME or the network function depending on the location of the stored log. This verification request comprises the requested identity type. Figure 1 shows two different options, either the verification request is sent in step S 13a to the MME or it is sent to the network function in step S 13b. This transmission may be triggered by the reception of the identity request message or triggered after sending the identity response message. In Figure 1 the first trigger case is shown.

In step S14 the receiving entity checks whether the message that the UE had received is one of the already logged messages. If this is the case, if the identity request is found in the memory storing the different transmitted identity request, it is determined that the identity request was transmitted by an entity entitled to ask for the identity. It is possible that the UE app sends the verification request of steps S13a or b via a different communication channel then the received identity request, as this may depend on the deployment scenario and the type of the application, whether it is an SIM application or a mobile application.

In Figure 1 the situation is furthermore shown that a false base station 50 transmits the identity request as shown by step S15. In step S16 the UE 100 transmits back the identity response with the requested type of identity as it cannot determine alone whether the transmitting entity is entitled to ask for the requested identity. Furthermore, however the UE 100 transmits the verification request to the core network, here the MME in step S17a or to the network function in step S17b. The core network entity, the receiving entity, then checks if the network has sent the identity request. It can search in the database for the corresponding request. As this request was not sent by the core network or an entity attached to the core network, no entry is found in the database and the verification entity can deduce that a false base station, FBS, has transmitted the request ( S18). In a step not shown, the MME can either inform the operator of the cellular network or can otherwise collect the detected information about the false base stations, so that this information can be retrieved from the verification entity.

The verification entity 200, 250 can log the transmitted identity requests for a defined period of time and after the period of time has lapsed, the information about the transmitted identity request may be removed from the memory or database. Furthermore, it is possible that the identity request messages are only stored and logged for a certain area in the cellular network, by way of example if there is a reasonable suspicion that a false base station may be present in a certain area of the cellular network. The memory may be collocated to the MME, or NF, or it may be a separate entity to which the MME 200 or NF 250 have access.

The method discussed above detects the false base stations or ID catchers by checking that the identity request messages received by a UE was indeed sent by a legitimate entity. This is obtained by mobile entities which notify the serving network about the reception of identity request messages, and the network can check its logs to see whether the identity request message was sent by the network itself or by a false base station. The method discussed above does not require a use of an additional device. Furthermore, information about the network topology is not needed. The mobile entity can implement an application running on the mobile entity or can use USIM application, which does not perform heavy computations but just informs the network about the reception of the identity request messages and request the verification.

The method is mainly based on the comparison of what is actually sent by the network and what is received by the UE, and any discrepancy here indicates that an unauthorized message has been transmitted by a false base station. Accordingly, the false-positive probability is nearly 0, as no statistical analysis is required. Furthermore, no complex signal analysis is involved, but only the simple comparison of the transmitted and received messages. This simplifies the computational effort needed for the detection.

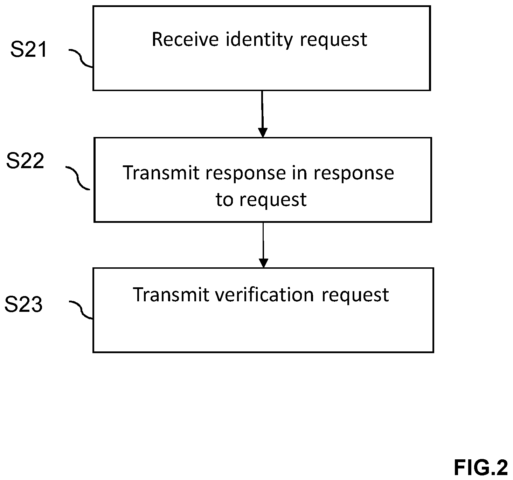

Figure 2 summarizes some of the main steps carried out by the mobile entity 100 in the message exchange shown in Figure 1.

In a first step S21 the mobile entity receives an identity request from the requesting entity. The requesting entity can be a component from the cellular network entitled to request the identity, however the requesting entity can also be a false base station or a node not entitled to request the permanent identity of the mobile entity. As the mobile entity cannot identify whether the requesting entity is entitled to request the identity of the UE, in step S22 the mobile entity transmits the response including the requested identity. However, in step S23 the UE additionally transmits in response to the identity request a verification request to an entity of the cellular network, an entity provided in the core network which is named as verification entity and which can be implemented as MME, as a separate network function, such as a network data analytics function.

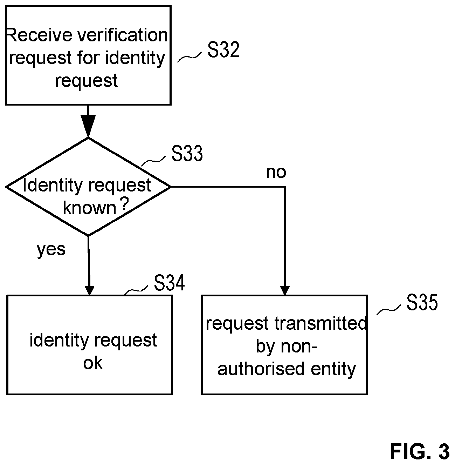

Figure 3 summarizes some of the steps carried out at the corresponding verification entity.

In step S 32 the verification entity receives the verification request, which was transmitted by the mobile entity as mentioned in connection with Figure 2. The verification request asks the verification entity to check the identity request which was received by the mobile entity and which requested the permanent identity of the mobile entity. In step S 33 the verification entity checks, in response to the received verification request, whether the identity request corresponds to one of several requests which are stored in a memory where the identity requests of the cellular network are stored. Accordingly the verification entity can access a kind of log file, where all the identity requests sent by members of the cellular network are stored, especially the requests sent in a defined time period in the past such as several seconds. If the identity request is found in the memory, the verification entity can conclude that it was transmitted by an entity of the cellular network (S34). If the identity request cannot be found in the corresponding memory or log file, the verification entity can determine that it was transmitted by an entity not belonging to the cellular network and by an entity not entitled to request this permanent identity. This corresponds to step S35.

The verification entity can still carry out the following steps in order to generate the log file or populate the memory. If the verification entity transmits itself an identity request to the mobile entity, the transmitted identity request is stored for a defined period of time in the corresponding memory, where the plurality of different identity requests are stored. Furthermore, it can receive in response to the identity request, a response from the mobile entity in which the response includes the permanent non-temporary identity of the mobile entity. These steps can proceed the steps shown in Figure 3.

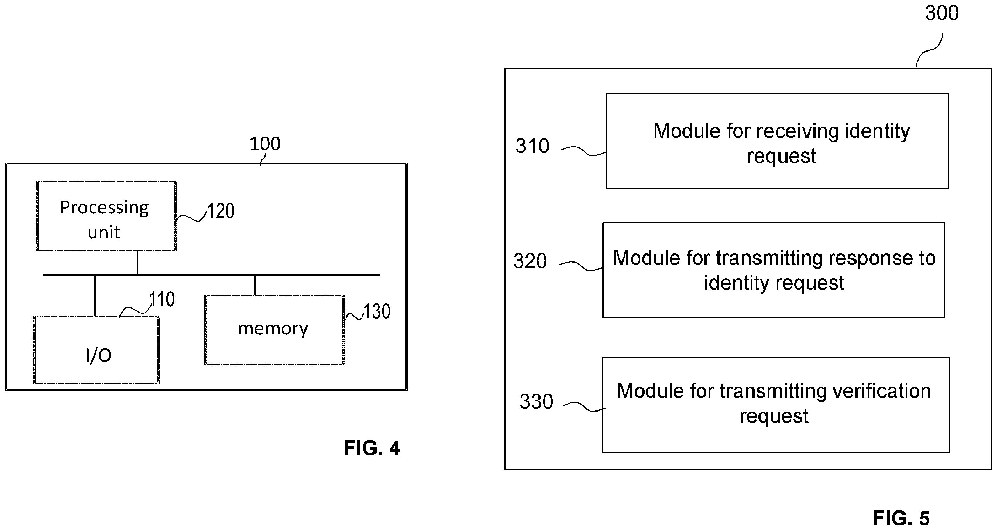

Figure 4 shows a schematic architectural view of the mobile entity, which can carry out the above discussed steps in which the mobile entity is involved. The mobile entity 100 comprises an interface 110, provided for transmitting user data or control messages to other entities, such as the verification entity and configured to receive user data or control messages from other entities, such as the identity request from an entitled entity or a false base station. The mobile entity furthermore comprises a processing unit 120 which is responsible for the operation of the mobile entity. The processing entity 120 comprises one or more processors and can carry out instructions stored on a memory 130, wherein the memory may include a read-only memory, a random access memory, a mass storage, a hard disk or the like. The memory can furthermore include suitable program code to be executed by the processing unit 120 so as to implement the above described functionalities in which the mobile entity is involved.

Figure 5 shows a further schematic architectural view of a mobile entity 300 which comprises a first module 310 configured to receive the identity request requesting the permanent unique identifier of the mobile entity. A second module 320 is configured to transmit in response to the received request, the requested permanent subscriber identity. A third module 330 is provided configured to transmit, also in response to the identity request the verification request to the verification entity, by which the mobile entity requests the verification entity to check the correctness and entitlement of the requesting entity.

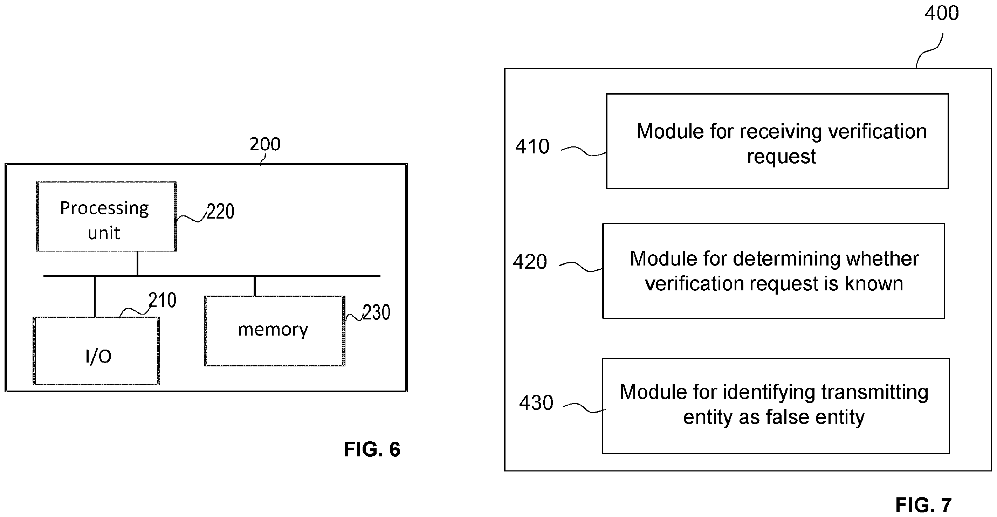

Figure 6 shows a schematic architectural view of the verification entity 200 which can carry out the above discussed verification of the identity requests. The verification entity 200 comprises an interface 210, provided for transmitting user data or control messages to other entities, such as the mobile entity and configured to receive user data or control messages from other entities, such as the verification request received from the mobile entity. The verification entity furthermore comprises a processing unit 220 responsible for the operation of the verification entity. The processing entity 220 comprises one or more processors and can carry out instructions stored on a memory 230. The memory may include a read-only memory, a random access memory, a mass storage, a hard disk or the like. The memory 230 can furthermore include a suitable program to be executed by the processing unit 220, so as to implement the above described functionalities in which the verification entity is involved.

Figure 7 shows a further schematic architectural view of the verification entity 400, comprising a first module 410, configured to receive the verification request from the mobile entity by which the verification of the identity request as received by the mobile entity is checked. A second module 420 is configured to check, in response to the verification request, whether the identity request corresponds to a known identity request, which is stored in a memory comprising the known identity requests. A third module 430 is provided configured to determine, if the request is not known, that the entity requesting the identity request is not belonging to the cellular network or is not entitled to request this permanent identity of the mobile entity.

From the above said some general conclusions can be drawn.

As far as the mobile entity is concerned, when the verification request is transmitted to the verification entity, the verification request may be transmitted to a core network of the cellular network, by way of example a mobile management entity MME, or a data analytics entity of the cellular network.

The transmission of the verification request may be triggered when the identity request is received or when the response is transmitted to the requesting entity.

The permanent non-temporary identifier may comprise the IMSI, however any other permanent non-temporary identifier might be used.

As far as the verification entity is concerned, the verification entity can transmit an identity request to the mobile entity, which requests the permanent non-temporary identity of the mobile entity. Furthermore, the verification entity can store the transmitted identity request for a defined time period in a memory where the plurality of different identity requests of the cellular network are stored. After the defined period of time has lapsed the transmitted identity request can be removed from the memory. The verification entity can furthermore receive, in response to the identity request, a response from the mobile entity which includes the permanent non-temporary identity of the mobile entity.

The transmitted identity request may be stored only for mobile entity's meeting a defined requirement, such as a defined type of mobile entity or a mobile entity located in a defined area within the cellular network.

The transmitted identity request may be stored in the memory configured to store identity requests for a plurality of different verification entities of the cellular network. Accordingly a unique memory or log file may be provided for the identity requests, transmitted by different entities of the cellular network. The memory can be a memory where the identity requests transmitted by any node of the cellular network ( e.g. nodes entitled to send identity requests) are stored for a defined period of time. Furthermore it is possible that different memories are used for different areas of the cellular network.

The verification entity may be implemented in a mobility management entity, a data analytics entity, or any other network function, which has access to the cellular network.

With the above discussed method the false-positive probability of identifying a false base station is close to zero, as no statistical analysis is needed for the decision. Furthermore, there is no need for an additional device, such as an apparatus to collect the identity request messages, as the UEs belong to the mobile network we do with using an application or any other software tool incorporated into the UE. The proposed solution does furthermore not involve any complex comparative analysis of signals transmitted by false or legitimate base stations, but only whether an identity request message captured by the network is originating from an entity, such as a MME of the network. This improves the energy efficiency and the computational simplicity. The proposed method can be easily enhanced to cover additional suspicious messages or message types by only updating the application on the mobile entities to report the new suspicious message type. This could be achieved by a simple software update at the mobile entities. Furthermore it is not necessary that all the mobile entities in a certain area required to have the proposed application.

## Claims

1. A method carried out at a verification entity of a cellular network, the method comprising:
- receiving, a verification request transmitted by a mobile entity, requesting a verification of an identity request by which a permanent, non-temporary identity of the mobile entity is requested from the mobile entity by which the mobile entity is uniquely identified in the cellular network,
- checking, in response to the verification request, whether the identity request corresponds to one of a plurality of identity requests stored in a memory, wherein if this is not the case,
- determining that the identity request was transmitted by an entity not belonging to the cellular network and not entitled to request the permanent non-temporary identity of the mobile entity, the method further comprising:
- transmitting the identity request to the mobile entity, the identity request requesting the permanent, non-temporary identity of the mobile entity by which the mobile entity is uniquely identified in the cellular network,
- storing the transmitted identity request for a defined period of time, in a memory configured to store a plurality of different identity requests,
- receiving, in response to the identity request, a response from the mobile entity, the response including the permanent, non-temporary identity of the mobile entity.

2. The method of claim 1, wherein the transmitted identity request is only stored for mobile entities meeting a defined requirement.

3. The method of claim 2, wherein the defined requirement comprises at least one of a defined type of mobile entity and a defined area within the cellular network.

4. The method of any of claims 1 to 3, wherein the transmitted identity request is stored in the memory configured to store identity requests for a plurality of different verification entities of the cellular network.

5. The method of any of claims 1 to 4, wherein the verification entity is implemented in a mobility management entity or a data analytics entity of the cellular network.

6. A verification entity (200) comprising a memory and at least one processing unit, the memory comprising instructions executable by the at least one processing unit, wherein the verification entity is operative to:
- receive, a verification request transmitted by a mobile entity, requesting a verification of an identity request by which a permanent, non-temporary identity of the mobile entity is requested from the mobile entity by which the mobile entity is uniquely identified in the cellular network,
- check, in response to the verification request, whether the identity request corresponds to one of a plurality of identity requests stored in a memory, wherein if this is not the case,
- determine that the identity request was transmitted by an entity not belonging to the cellular network and not entitled to request the permanent non-temporary identity of the mobile entity, the verification entity further being operative to
- transmit the identity request to the mobile entity, the identity request requesting the permanent, non-temporary identity of the mobile entity by which the mobile entity is uniquely identified in the cellular network,
- store the transmitted identity request for a defined period of time, in a memory configured to store a plurality of different identity requests,
- receive, in response to the identity request, a response from the mobile entity, the response including the permanent, non-temporary identity of the mobile entity.

7. The verification entity of claim 6, further being operative to only store the transmitted identity request for mobile entities meeting a defined requirement.

8. The verification entity of claim 7, wherein the defined requirement comprises at least one of a defined type of mobile entity and a defined area within the cellular network.

9. The verification entity of any of claims 6 to 8, further being operative to store the transmitted identity in the memory configured to store identity requests for a plurality of different verification entities of the cellular network.

10. The verification entity of any of claims 6 to 9, further being implemented in a mobility management entity or a data analytics entity of the cellular network.

11. A computer program comprising program code to be executed by at least one processing unit of a verification entity, wherein execution of the program code causes the at least one processing unit to carry out a method as mentioned in any of claims 1 to 5.

12. A carrier comprising a computer program of claim 11, wherein the carrier is one of an electronic signal, optical signal, radio signal and computer readable storage medium.

## Patentansprüche

1. Verfahren, das von einer Verifizierungsentität eines zellularen Netzwerks durchgeführt wird, wobei das Verfahren Folgendes umfasst:
- Empfangen einer Verifizierungsanforderung, die von einer mobilen Entität gesendet wird und eine Verifizierung einer Identitätsanforderung anfordert, durch die eine permanente, nicht-temporäre Identität der mobilen Entität von der mobilen Entität angefordert wird, durch die die mobile Entität im zellularen Netzwerk eindeutig identifiziert wird,
- Überprüfen in Reaktion auf die Verifizierungsanforderung, ob die Identitätsanforderung einer von einer Mehrzahl von Identitätsanforderungen entspricht, die in einem Speicher gespeichert ist, wobei, wenn die nicht der Fall ist,
- Bestimmen, dass die Identitätsanforderung von einer Entität gesendet wurde, die nicht zu dem zellularen Netzwerk gehört und nicht zum Anfordern der permanenten, nicht-temporären Identität der mobilen Entität berechtigt ist, wobei das Verfahren ferner Folgendes umfasst:
- Senden der Identitätsanforderung an die mobile Entität, wobei die Identitätsanforderung die permanente, nicht-temporäre Identität der mobilen Entität anfordert, durch die die mobile Entität im zellularen Netzwerk eindeutig identifiziert wird,
- Speichern der gesendeten Identitätsanforderung für eine definierte Zeitdauer in einem Speicher, der zum Speichern einer Mehrzahl verschiedener Identitätsanforderungen konfiguriert ist,
- Empfangen einer Antwort von der mobilen Entität in Reaktion auf die Identitätsanforderung, wobei die Antwort die permanente, nicht-temporäre Identität der mobilen Entität umfasst.

2. Verfahren nach Anspruch 1, wobei die gesendete Identitätsanforderung nur für mobile Entitäten gespeichert wird, die eine definierte Bedingung erfüllen.

3. Verfahren nach Anspruch 2, wobei die definierte Bedingung mindestens eines von einem definierten Typ der mobilen Entität und einem definierten Bereich innerhalb des zellularen Netzwerks umfasst.

4. Verfahren nach einem der Ansprüche 1 bis 3, wobei die gesendete Identitätsanforderung in dem Speicher gespeichert wird, der so konfiguriert ist, dass er Identitätsanforderungen für eine Mehrzahl verschiedener Verifizierungsentitäten des zellularen Netzwerks speichert.

5. Verfahren nach einem der Ansprüche 1 bis 4, wobei die Verifizierungsentität in einer Mobilitätsverwaltungsentität oder einer Datenanalyseentität des zellularen Netzwerks implementiert ist.

6. Verifizierungsentität (200), umfassend einen Speicher und mindestens eine Verarbeitungseinheit, wobei der Speicher Anweisungen umfasst, die von der mindestens einen Verarbeitungseinheit ausgeführt werden können, wobei Verifizierungsentität ausgelegt ist zum:
- Empfangen einer Verifizierungsanforderung, die von einer mobilen Entität gesendet wird und eine Verifizierung einer Identitätsanforderung anfordert, durch die eine permanente, nicht-temporäre Identität der mobilen Entität von der mobilen Entität angefordert wird, durch die die mobile Entität im zellularen Netzwerk eindeutig identifiziert wird,
- Überprüfen in Reaktion auf die Verifizierungsanforderung, ob die Identitätsanforderung einer von einer Mehrzahl von Identitätsanforderungen entspricht, die in einem Speicher gespeichert ist, wobei, wenn die nicht der Fall ist,
- Bestimmen, dass die Identitätsanforderung von einer Entität gesendet wurde, die nicht zu dem zellularen Netzwerk gehört und nicht zum Anfordern der permanenten, nicht-temporären Identität der mobilen Entität berechtigt ist, wobei die Verifizierungsentität ferner ausgelegt ist zum:
- Senden der Identitätsanforderung an die mobile Entität, wobei die Identitätsanforderung die permanente, nicht-temporäre Identität der mobilen Entität anfordert, durch die die mobile Entität im zellularen Netzwerk eindeutig identifiziert wird,
- Speichern der gesendeten Identitätsanforderung für eine definierte Zeitdauer in einem Speicher, der zum Speichern einer Mehrzahl verschiedener Identitätsanforderungen konfiguriert ist,
- Empfangen einer Antwort von der mobilen Entität in Reaktion auf die Identitätsanforderung, wobei die Antwort die permanente, nicht-temporäre Identität der mobilen Entität umfasst.

7. Verifizierungsentität nach Anspruch 6, die ferner dazu ausgelegt ist, nur die gesendeten Identitätsanforderung für mobile Entitäten zu speichern, die eine definierte Bedingung erfüllen.

8. Verifizierungsentität nach Anspruch 7, wobei die definierte Bedingung mindestens eines von einem definierten Typ der mobilen Entität und einem definierten Bereich innerhalb des zellularen Netzwerks umfasst.

9. Verifizierungsentität nach einem der Ansprüche 6 bis 8, die ferner dazu ausgelegt ist, die gesendete Identitätsanforderung in dem Speicher zu speichern, der so konfiguriert, dass er Identitätsanforderungen für eine Mehrzahl verschiedener Verifizierungsentitäten des zellularen Netzwerks speichert.

10. Verifizierungsentität nach einem der Ansprüche 6 bis 9, wobei die Verifizierungsentität in einer Mobilitätsverwaltungsentität oder einer Datenanalyseentität des zellularen Netzwerks implementiert ist.

11. Computerprogramm, umfassend Programmcode, der von mindestens einer Verarbeitungseinheit einer Verifizierungsentität auszuführen ist, wobei die Ausführung des Programmcodes die mindestens eine Verarbeitungseinheit zum Durchführen eines Verfahrens nach einem der Ansprüche 1 bis 5 veranlasst.

12. Datenträger, der ein Computerprogramm nach Anspruch 11 umfasst, wobei der Datenträger eines von einem elektronischen Signal, einem optischen Signal, einem Funksignal und einem computerlesbaren Speichermedium ist.

## Revendications

1. Procédé réalisé au niveau d'une entité de vérification d'un réseau cellulaire, le procédé comprenant :
- la réception d'une demande de vérification transmise par une entité mobile, demandant une vérification d'une demande d'identité par laquelle une identité permanente non temporaire de l'entité mobile est demandée à l'entité mobile, par laquelle l'entité mobile est identifiée de manière unique dans le réseau cellulaire,
- le contrôle, en réponse à la demande de vérification, si la demande d'identité correspond ou non à l'une d'une pluralité de demandes d'identité stockées dans une mémoire, dans lequel, si tel n'est pas le cas,
- la détermination que la demande d'identité a été transmise par une entité n'appartenant pas au réseau cellulaire et pas habilitée à demander l'identité permanente non temporaire de l'entité mobile, le procédé comprenant en outre :
- la transmission de la demande d'identité à l'entité mobile, la demande d'identité demandant l'identité permanente non temporaire de l'entité mobile par laquelle l'entité mobile est identifiée de manière unique dans le réseau cellulaire,
- le stockage de la demande d'identité transmise pendant une période de temps définie, dans une mémoire configurée pour stocker une pluralité de demandes d'identité différentes,
- la réception, en réponse à la demande d'identité, d'une réponse de l'entité mobile, la réponse comprenant l'identité permanente non temporaire de l'entité mobile.

2. Procédé selon la revendication 1, dans lequel la demande d'identité transmise est stockée uniquement pour des entités mobiles satisfaisant à une exigence définie.

3. Procédé selon la revendication 2, dans lequel l'exigence définie comprend au moins l'un parmi un type défini d'entité mobile et une zone définie à l'intérieur du réseau cellulaire.

4. Procédé selon l'une quelconque des revendications 1 à 3, dans lequel la demande d'identité transmise est stockée dans la mémoire configurée pour stocker des demandes d'identité pour une pluralité d'entités de vérification différentes du réseau cellulaire.

5. Procédé selon l'une quelconque des revendications 1 à 4, dans lequel l'entité de vérification est mise en œuvre dans une entité de gestion de mobilité ou dans une entité d'analyse de données du réseau cellulaire.

6. Entité de vérification (200) comprenant une mémoire et au moins unité de traitement, la mémoire comprenant des instructions exécutables par l'au moins une unité de traitement, dans laquelle l'entité de vérification est fonctionnelle pour :
- recevoir une demande de vérification transmise par une entité mobile, demandant une vérification d'une demande d'identité par laquelle une identité permanente non temporaire de l'entité mobile est demandée à l'entité mobile, par laquelle l'entité mobile est identifiée de manière unique dans le réseau cellulaire,
- contrôler, en réponse à la demande de vérification, si la demande d'identité correspond ou non à l'une d'une pluralité de demandes d'identité stockées dans une mémoire, dans laquelle, si tel n'est pas le cas,
- déterminer que la demande d'identité a été transmise par une entité n'appartenant pas au réseau cellulaire et pas habilitée à demander l'identité permanente non temporaire de l'entité mobile, l'entité de vérification étant en outre fonctionnelle pour :
- transmettre la demande d'identité à l'entité mobile, la demande d'identité demandant l'identité permanente non temporaire de l'entité mobile par laquelle l'entité mobile est identifiée de manière unique dans le réseau cellulaire,
- stocker la demande d'identité transmise pendant une période de temps définie, dans une mémoire configurée pour stocker une pluralité de demandes d'identité différentes,
- recevoir, en réponse à la demande d'identité, une réponse de l'entité mobile, la réponse comprenant l'identité permanente non temporaire de l'entité mobile.

7. Entité de vérification selon la revendication 6, étant en outre fonctionnelle pour stocker la demande d'identité transmise uniquement pour des entités mobiles satisfaisant à une exigence définie.

8. Entité de vérification selon la revendication 7, dans laquelle l'exigence définie comprend au moins l'un parmi un type défini d'entité mobile et une zone définie à l'intérieur du réseau cellulaire.

9. Entité de vérification selon l'une quelconque des revendications 6 à 8, étant en outre fonctionnelle pour stocker l'identité transmise dans la mémoire configurée pour stocker des demandes d'identité pour une pluralité d'entités de vérification différentes du réseau cellulaire.

10. Entité de vérification selon l'une quelconque des revendications 6 à 9, étant en outre mise en œuvre dans une entité de gestion de mobilité ou dans une entité d'analyse de données du réseau cellulaire.

11. Programme informatique comprenant un code de programme à exécuter par au moins une unité de traitement d'une entité de vérification, dans lequel une exécution du code de programme amène l'au moins une unité de traitement à réaliser un procédé selon l'une quelconque des revendications 1 à 5.

12. Support comprenant un programme informatique selon la revendication 11, dans lequel le support est l'un parmi un signal électronique, un signal optique, un signal radio et un support de stockage lisible par ordinateur.
